Europäisches Patentamt

European Patent Office

Office européen des brevets

(19)

(11) Numéro de publication : **0 156 679**
**B1**

(12)

# FASCICULE DE BREVET EUROPÉEN

(45) Date de publication du fascicule du brevet :
**25.03.87**

(21) Numéro de dépôt : **85400316.7**

(22) Date de dépôt : **21.02.85**

(51) Int. Cl.⁴ : **B 62 D 43/04**

(54) **Dispositif support de roue de rechange pour véhicule automobile.**

(30) Priorité : **24.02.84 FR 8402820**

(43) Date de publication de la demande :
**02.10.85 Bulletin 85/40**

(45) Mention de la délivrance du brevet :
**25.03.87 Bulletin 87/13**

(84) Etats contractants désignés :
**BE DE FR GB IT NL SE**

(56) Documents cités :
**EP-A- 0 003 267**
**CA-A- 959 805**
**US-A- 3 556 325**
**US-A- 4 117 963**
**PATENT ABSTRACTS OF JAPAN, vol. 6, no. 138, 27**
**juillet 1982, (M-145) (1016)**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Auduge, Gilles**
**21, Grande-Rue**
**F-78580 Maule (FR)**

(74) Mandataire : **Réal, Jacques et al**
**Régie Nationale des Usines Renault SCE 0804**
**F-92109 Boulogne Billancourt Cedex (FR)**

EP 0 156 679 B1

Jouve, 18, rue St-Denis, 75001 Paris, France

## Description

La présente invention a pour objet un dispositif support de roue de rechange pour véhicule automobile comportant un berceau articulé à l'une de ses extrémités sur la caisse du véhicule pour pivoter en dessous du plancher du véhicule entre une position relevée à proximité de ce dernier et une position abaissée proche du sol et un mécanisme de verrouillage permettant d'immobiliser l'extrémité libre du berceau en position relevée.

Un exemple de dispositif de l'art antérieur, qui correspond au préambule de la revendication 1, est décrit dans le document EP-A-0 003 267.

Le développement actuel d'une gamme importante pour un même modèle de véhicule conduit parfois à utiliser des roues dont les dimensions et essentiellement la largeur varient sensiblement d'un véhicule à l'autre de la gamme. Par ailleurs, on constate que les roues de rechange actuellement utilisées tendent à être remplacées de plus en plus par une roue de secours ou de dépannage dont la dimension en largeur est réduite de façon importante par rapport à la roue équipant le véhicule dans son fonctionnement normal.

Les deux tendances qui viennent d'être évoquées nécessitent de résoudre le problème de l'adaptation des dispositifs supports de roues de rechange du type mentionné plus haut pour assurer le maintien correct de roues de différentes dimensions et notamment en évitant que la roue ne puisse bouger par rapport à son berceau support.

Dans ce but, l'invention propose un dispositif, caractérisé en ce qu'il comporte un lien élastique extensible dont les extrémités sont fixées sur le véhicule et qui vient enserrer automatiquement la roue de rechange lorsque le berceau est amené en position relevée. Selon une autre caractéristique de l'invention, le lien élastique est fixé d'une part sur le berceau au voisinage de l'extrémité articulée de ce dernier et d'autre part sur le boîtier du dispositif de verrouillage de telle sorte qu'il vienne enserrer automatiquement la roue de rechange quelle que soit la largeur de cette dernière.

On décrira maintenant à titre d'exemple un mode de réalisation de l'invention en se référant aux dessins annexés dans lesquels :

la figure 1 est une vue latérale d'un dispositif support de roue de rechange réalisé conformément aux enseignements de la présente invention ; et

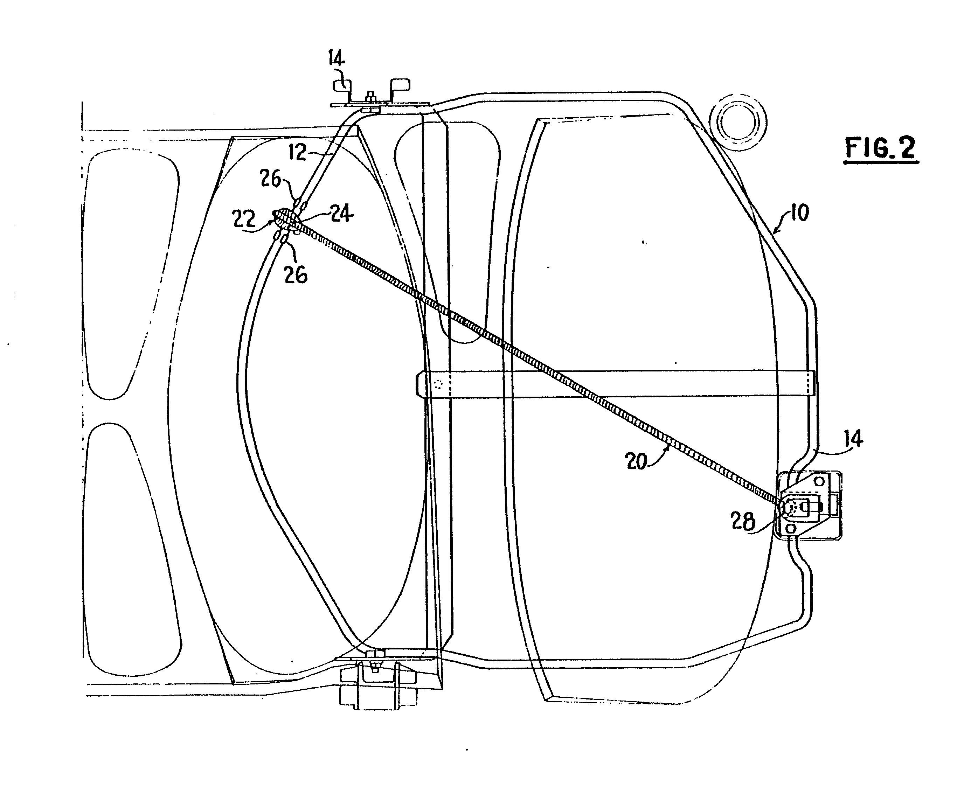

la figure 2 est une vue de dessus du dispositif représenté à la figure 1.

On a représenté aux figures un dispositif support de roue de rechange comportant un berceau 10 qui d'une manière classique est articulé à l'une de ses extrémités 12 par deux articulations 14 fixées sous le plancher 16 du véhicule. Le berceau tubulaire 10 peut ainsi pivoter en dessous du plancher 16 entre une position relevée représentée aux figures et une position abaissée proche du sol illustrée en traits mixtes sur les figures.

Le dispositif support de roue de rechange comporte également un mécanisme de verrouillage 18 permettant d'immobiliser l'extrémité libre 14 du berceau 10 en position relevée sous le plancher 16.

Conformément à la présente invention, le dispositif support de roue de rechange comporte un lien élastique extensible 20 dont les extrémités 22 et 23 sont fixées à demeure sur le véhicule.

Le lien élastique extensible 20 est un lien du type connu sous la dénomination de tendeur élastique. Son extrémité 22 est fixée sur le berceau 10 au voisinage de son extrémité articulée 12 au moyen d'un nœud coulant 24 entourant le tube constituant le berceau 10. Afin d'immobiliser latéralement le nœud coulant 24 sur le berceau, le tube constituant ce dernier est muni de deux butées 26 obtenues par déformation du métal. L'autre extrémité 23 du lien élastique 20 est munie d'un crochet 28 qui est accroché sur le boîtier du mécanisme de verrouillage 18.

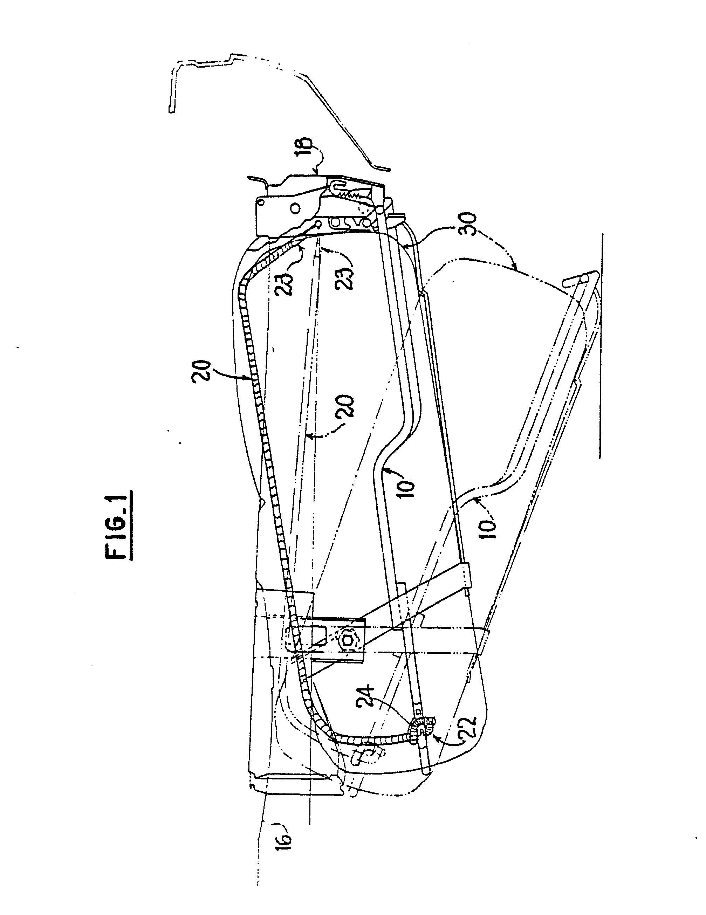

On comprend aisément, notamment en considérant la figure 1, que grâce à une telle disposition du lien élastique 20, ce dernier vient enserrer automatiquement la roue de rechange 30 illustrée en silhouette à la figure 1 lorsque l'on déplace le berceau vers sa position relevée et ceci quelle que soit la largeur de la roue de rechange installée dans le berceau 10.

L'invention qui vient d'être décrite permet donc de résoudre de façon simple et économique le problème posé par l'adaptation du berceau de roue de rechange à différentes dimensions de la roue qui y est installée et ce sans recourir ni à un modèle différent de berceau pour différents niveaux de gamme d'un même véhicule ni à des butées ou blocs de mousse équipant le berceau pour immobiliser en position la roue qui y est montée. De plus, la solution proposée se caractérise par son absence totale de manipulation par l'utilisateur lorsque ce dernier est amené à remplacer une roue du véhicule et à disposer dans le berceau de roue de rechange une roue d'une dimension supérieure à la roue de secours qui l'occupait précédemment.

On remarquera également la grande simplicité de fixation du lien élastique extensible sur le berceau au moyen d'un simple nœud coulant qui évite tous les problèmes inhérents à une fixation métal sur métal, par exemple au moyen d'un second crochet ou d'un rivetage ou d'un soudage.

Le mode de réalisation qui vient d'être décrit n'est qu'un simple exemple et n'est nullement limitatif de la portée du présent brevet. Par exemple le lien élastique pourrait être constitué par un lien à brins multiples dont les différentes extrémités seraient fixées à demeure sur le véhicule et qui viendraient enserrer la roue de rechange de façon plus complète si le besoin s'en faisait sentir.

## Revendications

1. Dispositif support de roue de rechange (30) pour véhicule automobile comportant un berceau (10) articulé à l'une de ses extrémités (12) sur la caisse du véhicule pour pivoter en dessous du plancher (16) du véhicule entre une position relevée à proximité de ce dernier et une position abaissée proche du sol et un mécanisme de verrouillage (18) permettant d'immobiliser l'extrémité libre (14) du berceau en position relevée, caractérisé en ce qu'il comporte un lien élastique extensible (20) dont les extrémités (22, 23) sont fixées sur le véhicule et qui vient enserrer automatiquement la roue de rechange (30) lorsque le berceau (10) est amené en position relevée.

2. Dispositif selon la revendication 1, caractérisé en ce que le lien élastique (20) est fixé d'une part sur le berceau (10) au voisinage de l'extrémité articulée (12) de ce dernier et d'autre part sur le boîtier du mécanisme de verrouillage (18) de telle sorte qu'il vienne enserrer automatiquement la roue de rechange (30) quelle que soit la largeur de cette dernière.

3. Dispositif selon l'une des revendications 1 et 2, caractérisé en ce qu'une des extrémités (22) du lien élastique (20) est fixée par un nœud coulant (24).

## Claims

1. Apparatus for supporting a spare wheel (30) for a motor vehicle, comprising a cradle (10) which is pivoted at one of its ends (12) to the body of the vehicle for pivotal movement below the floor (16) of the vehicle between a raised position in which it is in the vicinity of the latter and a lowered position in which it is close to the ground, and a locking mechanism (18) for immobilising the free end (14) of the cradle in the raised position characterised in that it comprises an extensible elastic strap (20) whose ends (22, 23) are fixed to the vehicle and which automatically tightens around the spare wheel (30) when the cradle (10) is moved into the raised position.

2. Apparatus according to claim 1 characterised in that the elastic strap (20) is fixed at one end to the cradle (10) in the vicinity of the pivoted end (12) thereof and on the other hand to the casing of the locking mechanism (18) in such a way that it automatically tightens around the spare wheel (30) irrespective of the width thereof.

3. Apparatus according to one of claims 1 and 2, characterised in that one of the ends (22) of the elastic strap (20) is fixed by a slip knot (24).

## Patentansprüche

1. Haltevorrichtung für das Ersatzrad (30) eines Kraftfahrzeuges mit einem Bügel (10), dessen eines Ende (12) an der Fahrzeugkarosserie angelenkt ist und unterhalb des Fahrzeugbodens (16) verschwenkbar ist zwischen einer angehobenen Stellung in der Nähe des letzteren und einer abgesenkten Stellung in der Nähe der Erde und mit einer Verriegelungsanordnung (18) zur Feststellung des freien Endes (14) des Bügels in der angehobenen Stellung, dadurch gekennzeichnet, daß sie eine dehnbare elastische Verbindung (20) aufweist, deren Enden (22, 23) am Fahrzeug befestigt sind und die automatisch das Ersatzrad (30) festklemmt, wenn der Bügel (10) in der angehobenen Stellung ist.

2. Vorrichtung nach Anspruch 1, dadurch gekennzeichnet, daß die elastische Verbindung (20) einerseits am Bügel (10) in der Nähe dessen angelenkten Endes (12) befestigt ist und andererseits am Gehäuse für die Verriegelungsanordnung (18) derart befestigt ist, daß sie automatisch das Ersatzrad (30) festlegt unabhängig von dessen Breite.

3. Vorrichtung nach einem der Ansprüche 1 und 2, dadurch gekennzeichnet, daß eines der Enden (22) der elastischen Verbindung (20) mittels eines Gleitknotens (24) befestigt ist.

# FIG.1

FIG.2